# FASCICULE DE BREVET EUROPEEN

(11) **EP 3 634 668 B1**
(45) Date de publication et mention de la délivrance du brevet: **23.03.2022**
(21) Numéro de dépôt: 18749038.8
(22) Date de dépôt: 12.07.2018
(51) Int. Cl.: B22F 1/00, B22F 3/10, B22F 3/22, B22F 5/00, B33Y 10/00, B22F 10/18, B22F 3/24, B22F 5/10

(54) **PROCÉDÉ DE FABRICATION DE PIÈCES DE FORME COMPLEXE PAR MOULAGE PAR INJECTION DE POUDRES MÉTALLIQUES**
VERFAHREN ZUR HERSTELLUNG VON TEILEN MIT KOMPLEXER FORM DURCH METALLPULVERSPRITZGIESSEN
METHOD FOR PRODUCING PARTS HAVING A COMPLEX SHAPE BY METAL POWDER INJECTION MOULDING

(30) Priorité: 21.07.2017 FR 1756916
(43) Date de publication de la demande: 15.04.2020
(73) Titulaire: Safran Helicopter Engines, 64510 Bordes (FR)
(72) Inventeur: DANIS, Yann, 77550 Moissy-Cramayel (FR); CHARES, Laurent, 77550 Moissy-Cramayel (FR)
(74) Mandataire: Brevalex
(86) Numéro de dépôt international: PCT/FR2018/051760
(87) Numéro de publication internationale: WO 2019/016447

(56) Documents cités:
- DE-A1- 10 314 277
- FR-A1- 2 944 720
- US-A1- 2004 126 266
- US-A1- 2013 052 074
- US-A1- 2013 231 427

## Description

### DOMAINE TECHNIQUE

La présente invention concerne un procédé de fabrication d'une pièce de forme complexe, plus précisément d'une pièce comprenant au moins une cavité interne, par une technique de moulage par injection de poudres métalliques.

Le domaine technique de l'invention peut être défini comme celui de la fabrication de pièces métalliques par la technique de moulage par injection de poudres métalliques, aussi désignée par le sigle «MIM » (« *Metal Injection Moulding* » en anglais).

### ÉTAT DE LA TECHNIQUE ANTÉRIEURE

La technique de moulage par injection de poudres métalliques, aussi désignée par le sigle «MIM » (« *Metal Injection Moulding* » en anglais) est une technique issue de la technique classique de métallurgie des poudres, qui permet la fabrication de pièces métalliques notamment de pièces métalliques de formes complexes.

Dans cette technique, on commence par préparer un mélange d'une poudre de métal ou d'alliage métallique et d'un liant thermoplastique tel qu'une cire ou un polymère. On fait en sorte que dans ce mélange, les particules, grains de métal ou d'alliage soient enrobés par le liant thermoplastique.

Ce mélange peut ensuite subir une opération de granulation pour être mis sous la forme de granulés ou « pellets » solides.

Le mélange est ensuite chauffé à une température suffisante pour qu'il devienne liquide, par exemple pâteux.

Le mélange liquide est maintenu à cette température et est injecté dans un moule dont la forme correspond à celle de la pièce à fabriquer.

Après refroidissement et solidification du liant, on obtient une ébauche crue ou « pièce verte » qui est extraite du moule.

Ensuite, on élimine le liant de cette ébauche crue ou « pièce verte ». Autrement dit, l'ébauche crue ou « pièce verte » est déliantée au cours d'une opération dite opération de déliantage.

Le déliantage peut être réalisé par voie chimique en éliminant le liant à l'aide d'eau ou d'un solvant organique.

Mais, le plus souvent, le déliantage est réalisé par voie thermique en chauffant la pièce verte, généralement dans un four sous atmosphère contrôlée.

A l'issue du déliantage, on obtient une pièce appelée « pièce brune ».

Après le déliantage, la pièce « brune » est frittée.

Au cours du frittage, la pièce est chauffée, jusqu'à une température proche de la température de fusion de métal ou de l'alliage métallique mais inférieure à cette température de fusion.

Le frittage provoque une réduction, un retrait, homothétique de la pièce car les grains de poudre de métal ou d'alliage se lient entre eux par diffusion provoquant ainsi une densification de la pièce.

La pièce obtenue à l'issue du frittage peut être directement utilisée ou bien elle peut subir divers traitements en fonction de l'application finale souhaitée. Ainsi, la pièce frittée peut par exemple être soumise à un traitement de Compression Isostatique à Chaud (CIC) qui permet de densifier encore plus la pièce.

La technique de moulage par injection de poudres métalliques, «MIM », présente de nombreux avantages, elle permet notamment de réaliser des pièces présentant des formes complexes qui possèdent un excellent état de surface et avec des tolérances de dimension fines.

La technique de moulage par injection de poudres métalliques est particulièrement avantageuse pour la fabrication en grandes quantités de pièces de petites tailles et de formes complexes.

Cependant, il est difficile par cette technique de moulage par injection de poudres métalliques de fabriquer des pièces présentant des cavités internes, plus précisément des pièces présentant des cavités internes avec des contre-dépouille, ou des pièces présentant des formes complexes non autoportantes.

De telles pièces sont notamment des pièces utilisées dans l'industrie aéronautique comme des aubes de turbine.

En effet, dans la technique de « MIM », après l'élimination totale du liant, avant le frittage, et au début du frittage, lorsque la pièce, comme on l'a indiqué plus haut, est portée à très haute température, les grains de la poudre de métal ou d'alliage ne sont pas encore suffisamment liés pour pouvoir supporter des porte-à-faux importants, ce qui peut induire un effondrement de la pièce.

C'est la raison pour laquelle les pièces présentant des cavités internes ne sont généralement pas réalisées par la technique de « MIM » mais par une technique classique de fonderie, essentiellement par la technique de fonderie dite à la cire perdue.

Dans cette technique de fonderie dite à la cire perdue, afin de fabriquer des pièces métalliques présentant des cavités internes, on commence par réaliser des noyaux en céramique dure par moulage. Ces noyaux sont ensuite insérés dans un moule avant de couler la cire, puis le métal est coulé dans le moule. Enfin, les noyaux sont dissouts par attaque chimique pour obtenir la pièce métallique finale présentant une cavité interne. Il est ainsi possible de réaliser des pièces avec des cavités fermées comme les circuits de refroidissement des pales de turbine.

L'utilisation de noyaux en céramique dure, dans la technique de « MIM » pour fabriquer des pièces présentant une cavité interne, ne permettrait pas la réduction de la taille, le retrait, de la pièce « brune » lors du frittage, et occasionnerait donc une déformation de la pièce finie.

Plus généralement, il n'est pas possible, afin de fabriquer par la technique de « MIM » des pièces avec des cavités internes, notamment des pièces avec une cavité interne présentant une contre-dépouille, de remplir ces cavités avec des noyaux non déformables, lors de l'injection d'une poudre métallique. En effet, un retrait de la pièce intervient lors du frittage, et les noyaux ne peuvent- se déformer pour suivre ce retrait de la pièce. En d'autres termes, lors du déliantage et du frittage, la pièce verte subit une réduction de taille homothétique, alors que les noyaux qui remplissent les cavités de cette pièce -et qui peuvent ne pas être démoulables, à cause des contre-dépouilles- ne peuvent subir des variations homothétiques de taille, ce qui engendre une déformation ou même une ruine de la pièce.

Cependant pour réaliser par la technique de « MIM » des pièces avec des cavités internes, possédant des formes complexes non autoportantes, il a été proposé, de réaliser un noyau, support, ou pièce porteuse dont la forme est celle de la cavité, et qui est obtenu par injection d'un mélange maître (*« feedstock »*) constitué par un matériau identique à celui de la pièce verte (ou matériau de même nuance que la pièce verte) et d'un polymère. Ce support ou noyau encore appelé « pièce porteuse » peut être recouvert d'un matériau anti-adhérent qui évite, lors du frittage, la diffusion d'éléments issus du noyau vers le métal ou alliage constituant la pièce.

Mais pour la réalisation de cavités en contre-dépouille, il faut que le noyau ou support puisse se retirer facilement. Or l'utilisation de noyaux constitués par le même matériau que celui de la pièce verte, et donc constitués à l'issue du frittage par le même matériau que celui de la pièce finie, ne permet pas de retirer ces noyaux, lorsqu'ils présentent des contre-dépouilles, sans endommager la pièce finie. Autrement dit, ces noyaux constitués par le même matériau que celui de la pièce ne sont pas démoulables.

Par ailleurs, le document FR-A1-2 944 720 décrit un procédé de réalisation par moulage par injection métallique (« MIM»), d'une pièce comportant au moins une cavité interne, comprenant les étapes suivantes :
a) réalisation d'un noyau reproduisant la forme de ladite cavité,
b) mise en place dudit noyau dans un moule d'injection reproduisant la forme extérieure de la pièce à réaliser,
c) réalisation d'un mélange de poudres métalliques et d'un liant thermoplastique,
d) injection dudit mélange dans le moule d'injection, suivie d'un refroidissement pour solidification,
e) déliantage de la pièce obtenue,
f) frittage de la pièce obtenue pour en assurer la cohésion et la densifier.

Ce procédé est caractérisé en ce que le noyau est réalisé en un matériau qui s'élimine au cours de l'opération de déliantage.

Dans le procédé de ce document, le noyau est éliminé lors de l'opération de déliantage, il n'est donc plus présent lors du frittage pour supporter la pièce et éviter son effondrement.

En outre, le procédé de ce document ne permet pas de réaliser des pièces avec des cavités qui respectent des tolérances précises.

Le document US-A1-2013/0231427 décrit un procédé de fabrication d'un objet par une technique d'injection de poudre métallique dans lequel on prépare un noyau vert entouré par une pièce verte, puis on réalise le déliantage du noyau vert et de la pièce verte. La pièce verte déliantée est ensuite frittée tandis que le noyau vert délianté demeure essentiellement dans un état non fritté. Le noyau délianté non fritté est séparé de la pièce verte déliantée frittée, moyennant quoi l'objet est formé.

Il existe donc, au regard de ce qui précède, un besoin pour un procédé qui permette la fabrication d'une pièce comprenant au moins une cavité interne par la technique de moulage par injection de poudres métalliques, «MIM », sans que la pièce finale, finie ne soit déformée.

Il existe encore un besoin pour un tel procédé qui ne présente pas les inconvénients, défauts, limitations et désavantages des procédés de fabrication d'une pièce comprenant au moins une cavité interne par la technique de moulage par injection de poudres métalliques, «MIM », exposés plus haut comme le procédé du document FR-A1-2 944 720.

Le but de la présente invention, est de répondre, entre autres, à ces besoins.

### EXPOSÉ DE L'INVENTION

Ce but, et d'autres encore sont atteints, conformément à l'invention, par un procédé de fabrication, par une technique de moulage par injection de poudre métallique (« MIM»), d'une pièce à fabriquer constituée par au moins un métal et/ou au moins un alliage de métaux comportant au moins une cavité interne, comprenant les étapes suivantes :
a) on prépare un noyau vert dont la forme correspond à la forme de ladite cavité, ce noyau étant constitué par un mélange d'au moins une poudre d'au moins une céramique et d'un liant thermoplastique;
b) on revêt éventuellement le noyau vert d'une couche anti-adhérente ; puis on réalise l'étape c), ou l'étape d), ou l'étape e) ;
c) on met en place ledit noyau vert éventuellement revêtu d'une couche anti-adhérente, dans un moule d'injection reproduisant la forme extérieure de la pièce à fabriquer; on injecte un mélange liquide chauffé d'au moins une poudre d'au moins un métal et/ou d'au moins un alliage de métaux constituant la pièce à fabriquer et d'un liant thermoplastique, dans ledit moule d'injection autour du noyau vert, et on refroidit ledit mélange pour le solidifier, moyennant quoi on obtient une pièce verte constituée par ledit mélange solide et comprenant une cavité interne remplie par le noyau vert;
d) on revêt ledit noyau vert éventuellement revêtu d'une couche anti-adhérente, d'un mélange liquide chauffé d'au moins une poudre d'au moins un métal et/ou d'au moins un alliage de métaux constituant la pièce à fabriquer et d'un liant thermoplastique; on refroidit ledit mélange pour le solidifier; et on usine ledit mélange pour que sa forme extérieure soit la forme extérieure de la pièce à fabriquer, moyennant quoi on obtient une pièce verte constituée par ledit mélange solide et comprenant au moins une cavité interne remplie par le noyau vert;
e) on met en place ledit noyau vert éventuellement revêtu d'une couche anti-adhérente entre au moins deux pièces vertes constituées par ledit mélange solide d'au moins une poudre d'au moins un métal et/ou d'au moins un alliage de métaux constituant la pièce à fabriquer et d'un liant thermoplastique ;
   à l'issue de l'étape c), ou de l'étape d), ou de l'étape e), on effectue successivement les étapes f), g), et h) suivantes :
f) on élimine simultanément le liant thermoplastique du noyau vert et de la pièce verte ou des pièces vertes, moyennant quoi on obtient un noyau dit noyau « brun » et une pièce dite pièce « brune » ou des pièces dites pièces « brunes » ;
g) on fritte simultanément le noyau brun et la pièce brune pour les densifier, ou on fritte simultanément le noyau brun et lesdites au moins deux pièces brunes pour les densifier et pour que lesdites au moins deux pièces brunes s'assemblent par soudage diffusion autour du noyau brun;
h) on élimine le noyau par dissolution, attaque chimique ou par décochage, moyennant quoi on obtient la pièce à fabriquer.

Le procédé selon l'invention comprend une suite spécifique d'étapes spécifiques qui n'a jamais été décrite ou suggérée dans l'art antérieur, notamment tel qu'il a été exposé plus haut. Dans le procédé selon l'invention, le noyau est constitué par un mélange d'une poudre d'au moins une céramique et d'un liant thermoplastique.

Le noyau peut donc être défini comme un noyau « vert ».

L'utilisation d'un tel noyau « vert » n'est pas suggérée dans l'art antérieur où les noyaux sont constitués par une céramique densifiée ou par un autre matériau également densifié.

En outre, selon l'invention, le noyau peut être, de préférence, un noyau soluble.

Par noyau soluble, on entend que la céramique du noyau peut être complètement dissoute par dissolution chimique lors de l'étape h) du procédé revendiqué.

Lors de l'étape h), le noyau peut aussi être éliminé par décochage.

Un noyau en céramique peut être détruit par décochage alors qu'un noyau métallique ne peut pas l'être.

De manière générale, selon l'invention, la matière du noyau est différente du métal et/ou de l'alliage constituant la pièce à fabriquer.

En outre, lorsque le matériau qui, outre le liant thermoplastique, constitue le noyau vert, est un matériau soluble, il se différencie de plus du matériau qui constitue la pièce, par le fait que le matériau qui constitue la pièce n'est, pas soluble lors de l'étape h) du procédé selon l'invention.

Généralement, lors du frittage le retrait du matériau du noyau doit être voisin de celui du matériau qui constitue la pièce pour ne pas provoquer de déformation.

Généralement, les températures de frittage et les coefficients de dilatation des matériaux qui constituent respectivement le noyau et la pièce doivent être égaux ou voisins.

Généralement, on fait en sorte d'adapter les caractéristiques du mélange, par exemple du mélange céramique du noyau vert, telles que la concentration et la granulométrie, afin d'obtenir des retraits sensiblement égaux au retrait de la pièce verte.

Selon une autre caractéristique essentielle du procédé revendiqué, lors de l'étape f), on élimine simultanément le liant thermoplastique du noyau « vert » et de la pièce verte ou des pièces vertes.

Autrement dit, le déliantage du noyau « vert » est réalisé » en même temps que le déliantage de la pièce verte ou des pièces vertes.

Selon encore une autre caractéristique essentielle du procédé revendiqué, lors de l'étape g) on fritte simultanément le noyau brun et la pièce brune pour les densifier, ou on fritte simultanément le noyau brun et lesdites au moins deux pièces brunes pour les densifier et pour que les au moins deux pièces brunes s'assemblent par soudage diffusion autour du noyau brun.

Autrement dit, le frittage du noyau « brun » est réalisé » en même temps que le frittage de la pièce brune ou des pièces brunes.

Selon l'invention, le noyau n'est pas éliminé avant le frittage, il reste en place, à l'intérieur de la pièce brune ou entre les deux pièces brunes pendant le frittage.

Le fait que le noyau reste en place pendant le frittage est extrêmement important, car le noyau présente de ce fait un retrait similaire à celui de la pièce ou des pièces pendant le frittage, ce qui permet notamment de supporter les parties internes des pièces, d'éviter toute déformation de celles-ci, et de garantir la stabilité dimensionnelle de ces pièces, en particulier dans le cas de pièces comportant des cavités internes avec des contre-dépouilles ou de pièces présentant des formes complexes non autoportantes.

Le noyau brun mis en œuvre dans le procédé selon l'invention se déforme lors du frittage tout comme la pièce brune ou les pièces brunes, il s'adapte donc parfaitement à la forme de cette pièce ou de ces pièces.

Au moment du frittage, la poudre du noyau, même non frittée, permet de soutenir la cavité interne.

Par exemple, selon l'invention, la présence du noyau, non seulement lors du déliantage mais aussi lors du frittage permet de supporter des porte-à-faux importants et d'éviter un effondrement de la pièce.

Le procédé selon l'invention se différencie du procédé du document FR-A1-2 944 720, notamment par le fait que dans le procédé de ce document, le noyau est retiré après déliantage. Il ne reste donc pas en place pendant le frittage pour éviter l'effondrement de la pièce.

Au contraire, dans le procédé selon l'invention, le noyau reste en place pendant le frittage ce qui évite l'effondrement de la pièce.

Dans le procédé selon l'invention, c'est seulement après le frittage, lors de l'étape h), que le noyau, tel qu'un noyau soluble, est éliminé, par dissolution, attaque, chimique, ou par décochage.

Dans le procédé du document FR-A1-2 944 720, le noyau est éliminé après le déliantage et avant le frittage, ce qui ne permet pas de soutenir la pièce durant le frittage.

Selon l'invention, lors de l'étape h), l'élimination du noyau, tel qu'un noyau soluble, se fait par dissolution, attaque, chimique, ou par décochage.

L'élimination du noyau par dissolution, attaque, chimique est facile à réaliser, et n'occasionne aucune déformation de la pièce préparée, à fabriquer.

Finalement, l'utilisation selon l'invention d'un noyau céramique, par exemple d'un noyau soluble céramique, permet pour la première fois la réalisation de pièces avec des cavités « non-démoulables » telles que des veines d'air de redresseur axial qui ne pouvaient jusqu'alors pas être réalisées par la technique de « MIM ». En effet, des pièces aussi complexes n'étaient jusqu'à présent pas réalisables par la technique « MIM » classique car la pièce s'effondrait avant le frittage.

Selon l'invention, le noyau vert est constitué par un mélange d'au moins une poudre d'au moins une céramique, et d'un liant thermoplastique.

Ladite céramique peut être choisie parmi les céramiques oxydes comme l'alumine ou la zircone.

Avantageusement, le métal ou l'alliage de métaux qui constitue la pièce à fabriquer est choisi parmi le nickel et les alliages à base de nickel, le titane et les alliages à base de titane, et les aciers, notamment les aciers inoxydables.

Avantageusement, le noyau vert peut être préparé par injection du mélange liquide chauffé d'au moins une poudre d'au moins une céramique, et d'un liant thermoplastique dans un moule dont la forme correspond à la forme de ladite cavité, puis refroidissement dudit mélange pour le solidifier.

De préférence, le noyau vert est préparé par une technique de moulage par injection de poudre céramique (« *Ceramic Injection Moulding* » ou « *CIM »* en anglais).

Ou bien le noyau vert peut être préparé par usinage ou mise en forme par impression 3D, par exemple par la technique du dépôt de fil (« *Fused Deposition Modeling »* ou « *FDM* » en anglais), du mélange d'au moins une poudre d'au moins une céramique, et d'un liant thermoplastique.

Le noyau peut éventuellement être éliminé par décochage.

Avantageusement, la pièce obtenue à l'issue de l'étape h) peut subir en outre un ou plusieurs traitements thermiques et/ou mécaniques tels qu'un traitement de Compression Isostatique à Chaud (CIC).

Si l'on réalise une dissolution chimique du noyau alors la céramique du noyau sera choisie de façon à ce que le noyau soit dissous par la composition chimique utilisée pour la dissolution, telle que la soude tandis que la pièce à préparer, à fabriquer n'est pas dissoute par cette composition chimique.

La composition chimique utilisée pour la dissolution du noyau peut être par exemple une base ou un acide.

Avantageusement, la pièce à fabriquer est choisie parmi les pièces de turbomachines aéronautiques telles que les redresseurs axiaux, les redresseurs radiaux, les distributeurs, et les diffuseurs centrifuges.

L'invention sera mieux comprise à la lecture de la description détaillée qui suit donnée à titre illustratif et non limitatif. Cette description est faite en relation avec les dessins joints.

### BRÈVE DESCRIPTION DES DESSINS

Les Figures 1 à 4 sont des vues schématiques en coupe verticale qui illustrent les différentes étapes du procédé selon l'invention.
- La Figure 1 illustre la préparation d'un noyau vert.
- La Figure 2 illustre le surmoulage du noyau vert.
- La Figure 3 illustre les étapes de déliantage et de frittage.
- La Figure 4 illustre l'étape finale de dissolution du noyau.

### EXPOSÉ DÉTAILLÉ DE MODES DE RÉALISATION PARTICULIERS

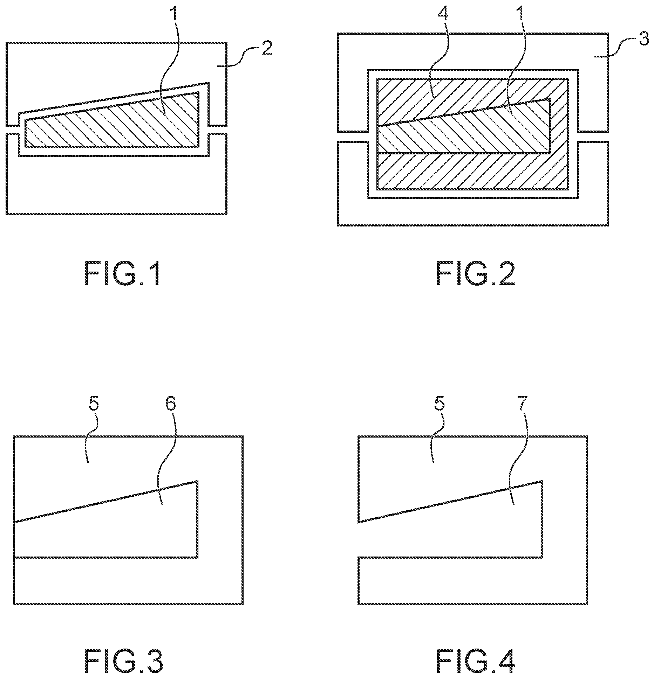

Sur la Figure 1, on montre la préparation d'un noyau A, 1, (étape a) du procédé selon l'invention) dont la forme correspond à la forme de la cavité de la pièce à fabriquer, ce noyau étant constitué par un mélange d'au moins une poudre d'au moins une céramique, et d'un liant thermoplastique. Ce noyau A, 1, peut donc être qualifié de « noyau vert ».

La nature de la poudre du noyau, notamment sa composition et sa granulométrie, ainsi que la répartition de la poudre et du liant dans le noyau, sont à adapter en fonction des propriétés de la pièce à fabriquer, en particulier en fonction de la température de frittage du métal ou de l'alliage de métaux qui constitue la pièce à fabriquer et du coefficient de dilatation du métal ou de l'alliage de métaux qui constitue la pièce à fabriquer.

Ainsi, dans le cas où la poudre du noyau est de la poudre d'alumine, sa granulométrie peut être telle qu'elle possède un D₉₀ < 30µm. Le noyau peut comprendre de 60% à 80% en volume de poudre et de 20% à 40% en volume de liant.

La Figure 1 présente un premier mode de réalisation pour la préparation du noyau vert A, 1, dans lequel le noyau est préparé par injection du mélange liquide chauffé d'au moins une poudre d'au moins une céramique, et d'un liant thermoplastique dans un moule 2 dont la forme correspond à la forme de la cavité de la pièce à fabriquer.

Le mélange liquide chauffé est ensuite refroidi pour le solidifier

Selon un deuxième mode de réalisation (non représenté) pour la préparation du noyau vert A, celui-ci peut être préparé par usinage du mélange d'au moins une poudre d'au moins une céramique, et d'un liant.

Selon un troisième mode de réalisation (non représenté) pour la préparation du noyau vert A, celui-ci peut être préparé par impression 3D du mélange d'au moins une poudre d'au moins une céramique, et d'un liant.

En d'autres termes et pour résumer, le noyau vert A peut être réalisé par moulage ou par usinage ou par impression 3D à l'état de pièce verte.

On revêt ensuite éventuellement le noyau vert ainsi préparé d'une couche anti-adhérente (étape b) du procédé selon l'invention).

Cette couche anti-adhérente peut être en tout matériau anti-adhèrent connu utilisé dans ce domaine de la technique.

Ainsi, ce matériau anti-adhérent peut être par exemple de l'oxyde de chrome.

Le noyau vert revêtu de la couche anti-adhérente est ensuite surmoulé par un mélange d'au moins une poudre d'au moins un métal et/ou d'au moins un alliage de métaux constituant la pièce à fabriquer B et d'un liant thermoplastique. Ce mélange est généralement appelé « mélange maître » (« *feedstock* » en anglais).

La Figure 2 présente un premier mode de réalisation de cette étape de surmoulage (étape c) du procédé selon l'invention), dans lequel on met en place ledit noyau vert A, 1, revêtu d'une couche anti-adhérente (non représentée), dans un moule d'injection 3 reproduisant la forme extérieure de la pièce à fabriquer; on injecte un mélange liquide chauffé d'au moins une poudre d'au moins un métal et/ou d'au moins un alliage de métaux constituant la pièce à fabriquer et d'un liant thermoplastique, dans ledit moule d'injection 3 autour du noyau vert 1; et on refroidit ledit mélange pour le solidifier, moyennant quoi on obtient une pièce verte B, 4, constituée par ledit mélange solide et comprenant une cavité interne remplie par le noyau A, 1.

Outre le premier mode de réalisation de l'étape de surmoulage présenté sur la Figure 2, cette étape de surmoulage peut être réalisée, selon un deuxième mode de réalisation (non représenté) de cette étape de surmoulage (étape d) du procédé selon l'invention), en revêtant ledit noyau 1 revêtu d'une couche anti-adhérente, d'un mélange liquide chauffé d'au moins une poudre d'au moins un métal et/ou d'au moins un alliage de métaux constituant la pièce à fabriquer et d'un liant thermoplastique; en refroidissant ledit mélange pour le solidifier ; et en usinant ledit mélange pour que sa forme extérieure soit la forme extérieure de la pièce à fabriquer. On obtient ainsi de la même manière que dans le premier mode de réalisation, une pièce verte constituée par ledit mélange solide et comprenant au moins une cavité interne remplie par le noyau.

Le noyau revêtu d'une couche anti-adhérente, peut être revêtu par le mélange maître par immersion du noyau revêtu de la couche anti-adhérente dans du mélange maître liquide.

L'usinage peut être réalisé par toute technique d'usinage connue adéquate.

En d'autres termes, pour résumer, le surmoulage peut être réalisé dans un moule spécifique ou par immersion dans du mélange maître liquide (« *feed-stock* ») puis le mélange maître refroidi solide est usiné.

Au lieu de surmouler le noyau A, 1, revêtu de la couche anti-adhérente par le mélange d'au moins une poudre d'au moins un métal et/ou d'au moins un alliage de métaux constituant la pièce à fabriquer B et d'un liant thermoplastique (mélange maitre), on peut selon un autre mode de réalisation (étape e) du procédé selon l'invention, décrit plus haut) mettre en place, insérer, intégrer, ledit noyau vert revêtu d'une couche anti-adhérente entre plusieurs (au moins deux) pièces vertes constituées par ledit mélange solide (mélange maitre) d'au moins une poudre d'au moins un métal et/ou d'au moins un alliage de métaux constituant la pièce à fabriquer et d'un liant thermoplastique.

Lors du frittage, les au moins deux pièces vertes, entre-temps déliantées, dites alors pièces « brunes » s'assembleront par soudage diffusion autour du noyau luimême fritté, autrement dit, lors du frittage, ces au moins deux pièces se colleront l'une à l'autre pour entourer ainsi le noyau également fritté et former la pièce à fabriquer.

Les pièces vertes peuvent être obtenues par toute technique adéquate.

Ainsi ces pièces vertes peuvent être obtenues par moulage par injection de poudres, par une technique de fabrication additive telle que la technique de dépôt de fil (« *Fused Deposition Modeling* » ou « *FDM »* en anglais) ou par usinage au vert.

En d'autres termes, pour résumer, la pièce verte à fabriquer B peut ne pas être surmoulée sur le noyau, et le noyau vert peut être inséré entre au moins 2 pièces vertes moulées ou usinées.

La Figure 3 illustre les étapes de déliantage f) et de frittage g) du procédé revendiqué.

Ces étapes sont réalisées successivement à l'issue de l'étape c), de l'étape d) ou de l'étape e).

Lors de l'étape f), qui est donc qualifiée d'étape de déliantage, on élimine simultanément le liant thermoplastique du noyau (noyau vert) et le liant thermoplastique de la pièce verte ou des pièces vertes.

Le déliantage peut être réalisé par toute technique de déliantage connue.

Cette technique de déliantage est choisie de manière appropriée selon la nature du liant thermoplastique utilisé, tel qu'une résine ou un polymère.

Cette technique de déliantage peut être une technique de déliantage catalytique, thermique, par solvant, à l'eau, ou par un fluide supercritique tel que le CO₂ supercritique.

A l'issue de cette étape de déliantage, on obtient donc une pièce verte déliantée dite pièce « brune » 5, constituée par ledit mélange solide délianté et comprenant au moins une cavité interne remplie par le noyau vert déliantée 6 que l'on peut qualifier de noyau« brun ».

Ou bien, à l'issue de cette étape de déliantage, on obtient un noyau « brun » entre plusieurs (au moins deux) pièces vertes déliantées, dites pièces « brunes ».

Après l'étape de déliantage, qui est l'étape f) du procédé revendiqué, on fritte simultanément (étape g) du procédé selon l'invention) le noyau « brun » 6 et la pièce « brune » 5 pour les densifier, ou on fritte simultanément le noyau « brun » et lesdites au moins deux pièces « brunes » pour les densifier et pour que les au moins deux pièces brunes s'assemblent par soudage diffusion autour du noyau formant ainsi la pièce à fabriquer.

Le frittage est généralement réalisé dans un four où le noyau « brun » 6 et la pièce « brune » 5, ou le noyau « brun » et lesdites au moins deux pièces « brunes » sont chauffées jusqu'à une température proche de la température de fusion du métal ou de l'alliage constituant la pièce B.

La température, la durée du frittage et l'atmosphère dans le four sont contrôlées de manière à ce que les particules de métal ou d'alliage de la pièce B se lient entre elles par diffusion. Les pores du noyau « brun » et les pores de la ou des pièces « brunes » sont réduits progressivement et la ou les pièces brunes se densifient lors de cette étape de frittage. La densification conduit généralement à un retrait de la pièce ou des pièces brunes qui est par exemple de l'ordre de 10% à 20%. Selon l'invention, le retrait de la pièce brune ou des pièces brunes d'une part, et le retrait du noyau brun d'autre part sont généralement égaux ou voisins, c'est à dire que le retrait du noyau brun et de la ou des pièces brunes ne diffèrent pas trop, par exemple pas de plus de 10%, 5%, voire 1%, afin qu'aucune déformation de la pièce ne se produise lors du frittage.

Toutefois, la valeur de la différence entre le retrait de la pièce brune ou des pièces brunes d'une part, et le retrait du noyau brun d'autre part ne peut généralement pas être figée car cette valeur dépend également des coefficients de dilatation. Par ailleurs il faut aussi gérer les contraintes de serrage entre la pièce et le noyau.

De ce fait, il est possible d'avoir des retraits légèrement différents permettant de ne pas engendrer de contraintes dues à une dilatation différentielle lors du refroidissement.

Comme cela est représenté sur la Figure 4, on procède ensuite, lors de l'étape h) du procédé selon l'invention à l'élimination du noyau soluble 6 par dissolution, attaque chimique pour obtenir ainsi une pièce 5 comportant une cavité interne à la place du noyau 6.

Cette dissolution, attaque chimique est généralement réalisée à l'aide d'une base telle que la soude, par exemple dans le cas où le noyau est en alumine.

En fonction de l'état de solidité du noyau, on peut également envisager le décochage.

Avantageusement, la pièce 5 obtenue à l'issue de l'étape h) peut subir un ou plusieurs traitement(s) thermiques et/ou mécaniques tels qu'un traitement de Compression Isostatique à Chaud (CIC) pour accroître encore la densité de la pièce.

## Revendications

1. Procédé de fabrication, par une technique de moulage par injection de poudre métallique, d'une pièce à fabriquer constituée par au moins un métal et/ou au moins un alliage de métaux comportant au moins une cavité interne, comprenant les étapes suivantes :
a) on prépare un noyau vert (1) dont la forme correspond à la forme de ladite cavité, ce noyau (1) étant constitué par un mélange d'au moins une poudre d'au moins une céramique et d'un liant thermoplastique ;
b) on revêt éventuellement le noyau vert (1) d'une couche anti-adhérente ; puis on réalise l'étape c), ou l'étape d), ou l'étape e) ;
c) on met en place ledit noyau vert (1) éventuellement revêtu d'une couche anti-adhérente, dans un moule d'injection (3) reproduisant la forme extérieure de la pièce à fabriquer; on injecte un mélange liquide chauffé d'au moins une poudre d'au moins un métal et/ou d'au moins un alliage de métaux constituant la pièce à fabriquer et d'un liant thermoplastique, dans ledit moule d'injection (3) autour du noyau vert (1), et on refroidit ledit mélange pour le solidifier, moyennant quoi on obtient une pièce verte (4) constituée par ledit mélange solide et comprenant une cavité interne remplie par le noyau vert (1) ;
d) on revêt ledit noyau vert (1) éventuellement revêtu d'une couche anti-adhérente, d'un mélange liquide chauffé d'au moins une poudre d'au moins un métal et/ou d'au moins un alliage de métaux constituant la pièce à fabriquer et d'un liant thermoplastique; on refroidit ledit mélange pour le solidifier; et on usine ledit mélange pour que sa forme extérieure soit la forme extérieure de la pièce à fabriquer, moyennant quoi on obtient une pièce verte constituée par ledit mélange solide et comprenant au moins une cavité interne remplie par le noyau vert (1) ;
e) on met en place ledit noyau vert (1) éventuellement revêtu d'une couche anti-adhérente entre au moins deux pièces vertes constituées par ledit mélange solide d'au moins une poudre d'au moins un métal et/ou d'au moins un alliage de métaux constituant la pièce à fabriquer et d'un liant thermoplastique ;
à l'issue de l'étape c), ou de l'étape d), ou de l'étape e), on effectue successivement les étapes f), g), et h) suivantes :
f) on élimine simultanément le liant thermoplastique du noyau vert et de la pièce verte ou des pièces vertes, moyennant quoi on obtient un noyau dit noyau « brun » (6) et une pièce dite pièce « brune » (5) ou des pièces dites pièces « brunes » ;
g) on fritte simultanément le noyau brun (6) et la pièce brune (5) pour les densifier, ou on fritte simultanément le noyau brun et lesdites au moins deux pièces brunes pour les densifier et pour que lesdites au moins deux pièces brunes s'assemblent par soudage diffusion autour du noyau brun;
h) on élimine le noyau (6), par dissolution, attaque, chimique ou par décochage), moyennant quoi on obtient la pièce à fabriquer.

2. Procédé selon la revendication 1, dans lequel ladite céramique est choisie parmi les céramiques oxydes comme l'alumine ou la zircone.

3. Procédé selon l'une quelconque des revendications précédentes, dans lequel le noyau vert (1) est préparé par injection du mélange liquide chauffé d'au moins une poudre d'au moins une céramique, et d'un liant thermoplastique dans un moule (2) dont la forme correspond à la forme de ladite cavité, puis refroidissement dudit mélange pour le solidifier.

4. Procédé selon la revendication 3, dans lequel le noyau vert (1) est préparé par une technique de moulage par injection de poudre céramique.

5. Procédé selon l'une quelconque des revendications 1 à 2, dans lequel le noyau vert (1) est préparé par usinage du mélange d'au moins une poudre d'au moins une céramique, et d'un liant thermoplastique.

6. Procédé selon l'une quelconque des revendications 1 à 2, dans lequel le noyau vert (1) est préparé par mise en forme par impression 3D, par exemple par la technique de dépôt de fil , du mélange d'au moins une poudre d'au moins une céramique, et d'un liant thermoplastique.

7. Procédé selon l'une quelconque des revendications précédentes, dans lequel le métal ou l'alliage de métaux qui constitue la pièce à fabriquer est choisi parmi le nickel et les alliages à base de nickel, le titane et les alliages à base de titane, et les aciers, notamment les aciers inoxydables.

8. Procédé selon l'une quelconque des revendications précédentes, dans lequel la pièce obtenue à l'issue de l'étape h) subit en outre un ou plusieurs traitements thermiques et/ou mécaniques tels qu'un traitement de Compression Isostatique à Chaud.

9. Procédé selon l'une quelconque des revendications précédentes, dans lequel la pièce à fabriquer est choisie parmi les pièces de turbomachines aéronautiques telles que les redresseurs radiaux, les redresseurs axiaux, les distributeurs, et les diffuseurs centrifuges.

## Patentansprüche

1. Verfahren zur Herstellung, durch eine Metallpulver-Spritzgießtechnik, eines herzustellenden Teils, das mindestens aus einem Metall und/oder mindestens einer Metalllegierung besteht und zumindest einen Innenhohlraum aufweist, mit den folgenden Schritten:
a) Herstellen eines grünen Kerns (1), dessen Form der Form des Hohlraums entspricht, wobei der Kern (1) aus einer Mischung von mindestens einem Pulver aus mindestens einem Keramikmaterial und einem thermoplastischen Bindemittel besteht;
b) gegebenenfalls Beschichten des grünen Kerns (1) mit einer nichthaftenden Schicht; daraufhin Durchführen des Schritts c) oder des Schritts d) oder des Schritts e);
c) Einführen des gegebenenfalls mit einer nichthaftenden Schicht beschichteten grünen Kerns (1) in eine Spritzgießform (3), die die Außenform des herzustellenden Teils wiedergibt; Einspritzen einer erhitzten flüssigen Mischung von mindestens einem Pulver aus zumindest einem Metall und/oder zumindest einer Metalllegierung, die das herzustellende Teil bildet, und einem thermoplastischen Bindemittel in die Spritzgießform (3) um den grünen Kern (1) herum, sowie Abkühlen der Mischung, um diese zu verfestigen, wodurch ein grünes Teil (4) erhalten wird, das aus der festen Mischung besteht und einen durch den grünen Kern (1) ausgefüllten Innenhohlraum aufweist;
d) Beschichten des gegebenenfalls mit einer nichthaftenden Schicht beschichteten grünen Kerns (1) mit einer erhitzten flüssigen Mischung von mindestens einem Pulver aus zumindest einem Metall und/oder zumindest einer Metalllegierung, die das herzustellende Teil bildet, und einem thermoplastischen Bindemittel; Abkühlen der Mischung, um diese zu verfestigen; und Bearbeiten der Mischung, damit ihre Außenform die Außenform des herzustellenden Teils bildet, wodurch ein grünes Teil erhalten wird, das aus der festen Mischung besteht und mindestens einen durch den grünen Kern (1) ausgefüllten Innenhohlraum aufweist;
e) Einführen des gegebenenfalls mit einer nichthaftenden Schicht beschichteten grünen Kerns (1) zwischen mindestens zwei grüne Teile aus der festen Mischung von mindestens einem Pulver aus zumindest einem Metall und/oder zumindest einer Metalllegierung, die das herzustellende Teil bildet, und einem thermoplastischen Bindemittel;
nach Abschluss des Schritts c) oder des Schritts d) oder des Schritts e), nacheinander Durchführen der folgenden Schritte f), g) und h):
f) gleichzeitiges Entfernen des thermoplastischen Bindemittels von dem grünen Kern und von dem grünen Teil bzw. den grünen Teilen, wodurch ein sogenannter "brauner" Kern (6) sowie ein sogenanntes "braunes" Teil (5) oder sogenannte "braune" Teile erhalten werden;
g) gleichzeitiges Sintern des braunen Kerns (6) und des braunen Teils (5), um diese zu verdichten, oder gleichzeitiges Sintern des braunen Kerns und der mindestens zwei braunen Teile, um diese zu verdichten, und damit sich die mindestens zwei braunen Teile durch Diffusionsschweißen um den braunen Kern herum zusammenfügen;
h) Entfernen des Kerns (6) durch chemische Auflösen, Ätzen, oder durch Ausschlagen, wodurch das herzustellende Teil erhalten wird.

2. Verfahren nach Anspruch 1, wobei das Keramikmaterial aus den Keramikoxiden wie Aluminiumoxid oder Zirkonoxid ausgewählt ist.

3. Verfahren nach einem der vorhergehenden Ansprüche, wobei der grüne Kern (1) durch Einspritzen der erhitzten flüssigen Mischung von mindestens einem Pulver aus zumindest einem Keramikmaterial und einem thermoplastischen Bindemittel in eine Form (2), deren Form der Form des Hohlraums entspricht, danach Abkühlen der Mischung zur Verfestigung derselben hergestellt wird.

4. Verfahren nach Anspruch 3, wobei der grüne Kern (1) durch eine Keramikpulver-Spritzgießtechnik hergestellt wird.

5. Verfahren nach einem der Ansprüche 1 bis 2, wobei der grüne Kern (1) durch Bearbeitung der Mischung von mindestens einem Pulver aus zumindest einem Keramikmaterial und einem thermoplastischen Bindemittel hergestellt wird.

6. Verfahren nach einem der Ansprüche 1 bis 2, wobei der grüne Kern (1) durch 3D-Druckformen, beispielsweise durch die Fadenaufbringungstechnik, der Mischung von mindestens einem Pulver aus zumindest einem Keramikmaterial und einem thermoplastischen Bindemittel hergestellt wird.

7. Verfahren nach einem der vorhergehenden Ansprüche, wobei das Metall oder die Metalllegierung, die das herzustellende Teil bildet, aus Nickel und Legierungen auf Nickelbasis, Titan und Legierungen auf Titanbasis sowie Stählen, insbesondere rostfreien Stählen ausgewählt ist.

8. Verfahren nach einem der vorhergehenden Ansprüche, wobei das nach Schritt h) erhaltene Teil außerdem einer oder mehreren thermischen und/oder mechanischen Behandlungen, wie z.B. einer isostatischen Heißpressbehandlung, unterzogen wird.

9. Verfahren nach einem der vorhergehenden Ansprüche, wobei das herzustellende Teil aus den Teilen von Flugzeug-Turbomaschinen, wie z.B. radialen Gleichrichtern, axialen Gleichrichtern, Verteilern und Zentrifugaldiffusoren, ausgewählt ist.

## Claims

1. A method for producing, by a metal powder injection moulding ("MIM") technique, a part to be produced consisting of at least one metal and/or at least one metal alloy including at least one inner cavity, comprising the following steps of:
a) preparing a green core (1) the shape of which corresponds to the shape of said cavity, this core (1) consisting of a mixture of at least one powder of at least one ceramic and of a thermoplastic binder;
b) optionally coating the green core (1) with a anti-adhesive layer; and then performing step c), or step d), or step e);
c) placing said green core (1) optionally coated with a anti-adhesive layer, into an injection mould (3) replicating the external shape of the part to be produced; injecting a heated liquid mixture of at least one powder of at least one metal and/or at least one metal alloy constituting the part to be produced and of a thermoplastic binder, into said injection mould (3) around the green core (1), and cooling said mixture to solidify it, whereby a green part (4) consisting of said solid mixture and comprising an inner cavity filled with the green core (1) is obtained;
d) coating said green core (1) optionally coated with a anti-adhesive layer, with a heated liquid mixture of at least one powder of at least one metal and/or of at least one metal alloy constituting the part to be produced and of a thermoplastic binder; cooling said mixture to solidify it; and machining said mixture so that its external shape is the external shape of the part to be produced, whereby a green part consisting of said solid mixture and comprising at least one inner cavity filled with the green core (1) is obtained;
e) placing said green core (1) optionally coated with a anti-adhesive layer between at least two green parts consisting of said solid mixture of at least one powder of at least one metal and/or at least one metal alloy constituting the part to be produced and of a thermoplastic binder;
at the end of step c), or step d), or step e), successively carrying out following steps f), g), and h):
f) simultaneously removing the thermoplastic binder from the green core and from the green part or from the green parts, whereby a core called a "brown" core (6) and a part called a "brown" part (5) or parts called "brown" parts are obtained;
g) simultaneously sintering the brown core (6) and the brown part (5) to densify them, or simultaneously sintering the brown core and said at least two brown parts to densify them and so that said at least two brown parts are assembled together through diffusion welding around the brown core;
h) removing the core (6), by chemical dissolution, etching, or by shakeout, whereby the part to be produced is obtained.

2. The method according to claim 1, wherein said ceramic is selected from oxide ceramics such as alumina or zirconia.

3. The method according to any one of the preceding claims, wherein the green core (1) is prepared by injecting the heated liquid mixture of at least one powder of at least one ceramic, and of a thermoplastic binder into a mould (2) the shape of which corresponds to the shape of said cavity, and then cooling said mixture to solidify it.

4. The method according to claim 3, wherein the green core (1) is prepared by a ceramic powder injection moulding or "CIM" technique.

5. The method according to any one of claims 1 to 2, wherein the green core (1) is prepared by machining the mixture of at least one powder of at least one ceramic, and of a thermoplastic binder.

6. The method according to any one of claims 1 to 2, wherein the green core (1) is prepared by 3D printing shaping, for example by the Fused Deposition Modeling or *"FDM"* technique using the mixture of at least one powder of at least one ceramic, and of a thermoplastic binder.

7. The method according to any one of the preceding claims, wherein the metal or metal alloy which constitutes the part to be produced is selected from nickel and nickel-based alloys, titanium and titanium-based alloys, and steels, especially stainless steels.

8. The method according to any one of the preceding claims, wherein the part obtained at the end of step h) further undergoes one or several heat and/or mechanical treatments such as a hot isostatic pressing (HIP) treatment.

9. The method according to any one of the preceding claims, wherein the part to be produced is selected from parts of aeronautical turbomachineries such as radial straighteners, axial straighteners, distributors, and centrifugal diffusers.
